# FASCICULE DE BREVET EUROPEEN

(11) **EP 0 403 322 B1**
(45) Date de publication et mention de la délivrance du brevet: **28.07.1993**
(21) Numéro de dépôt: 90401313.3
(22) Date de dépôt: 17.05.1990
(51) Int. Cl.: H02B 1/28, H02B 1/46, F16B 21/04

(54) **Coffret à fermeture rapide**
Schnellverschlussgehäuse
Fast-closing housing

(30) Priorité: 13.06.1989 FR 8907771
(43) Date de publication de la demande: 19.12.1990
(73) Titulaire: TELEMECANIQUE, 92504 Rueil Malmaison Cedex (FR)
(72) Inventeur: Maes, Fabrice, F-95120 Ermont (FR)
(74) Mandataire: de Saint-Palais, Arnaud Marie

(56) Documents cités:
- AT-B- 380 546
- DE-U- 8 806 796
- FR-A- 2 113 338
- US-A- 4 040 151

## Description

Coffret à fermeture rapide comprenant une embase en matière moulée et un couvercle fixé sur elle à l'aide de vis traversant chacune une ouverture de ce couvercle et présentant une extrémité filetée ayant un faible diamètre et un petit pas qui se trouve engagée dans un trou taraudé appartenant à un prolongement cylindrique coaxial pourvu extérieurement d'un filetage à grand pas de diamètre supérieur au précédent, ce second filetage étant à son tour engagé dans un second trou taraudé fixe qui est disposé dans l'embase au voisinage d'une paroi de celle-ci.

Ces coffrets, qui sont en particulier très largement utilisés dans des installations électriques, reçoivent dans ce cas des appareils électriques à protéger de l'extérieur tels que par exemple des contacteurs, des disjoncteurs, des relais thermiques ou tout autre accessoire nécessaire à leur raccordement qui sont fixés dans l'embase, ainsi que le cas échéant des interrupteurs, des inverseurs, des voyants qui sont fréquemment rendus solidaires du couvercle.

Lorsque les installations électriques occupent un volume important en raison du grand nombre d'appareils électriques auxquels elles font appel, les temps de mise en place, de raccordement et de fermeture des coffrets occupent une fraction importante des tâches du personnel d'installation et, par suite, toute mesure technique susceptible d'abréger ceux-ci est considérée comme une valeur intrinsèque non négligeable du matériel.

Il a donc été recherché des dispositions qui soient en mesure de réduire notamment les temps nécessaires à l'ouverture et à la fermeture des coffrets à l'aide de moyens mentionnés ci-dessus ; les dispositions déjà prises répondent, par ailleurs, à deux objectifs supplémentaires qui sont, d'une part, celui d'appliquer le couvercle avec une force suffisante pour opérer une compression convenable du joint d'étanchéité placé entre l'embase et le couvercle et, d'autre part, celui de mettre en oeuvre des taraudages de vis en matière plastique qui ne soient pas en mesure de s'user lors de l'engagement des filetages métalliques qui coopèrent avec eux.

Une préoccupation constante dans toutes les industries est celle de l'abaissement des coûts techniques de fabrication qui passe fréquemment par la simplification des moyens de production.

Lorsque l'on a choisi de disposer des taraudages sur des pièces moulées en matière plastique, on est généralement amené à équiper les moules de broches filetées dont l'extraction, lorsque leur diamètre est réduit, ne peut s'opérer que par une rotation de celles-ci.

Le temps consacré à cette extraction représente une fraction déterminante du temps nécessaire à l'ouverture totale du moule et toute économie de manoeuvre au cours de cette opération constituera un gain de productivité appréciable. Par ailleurs, ces broches rotatives sont sensiblement plus coûteuses et plus sujettes à dérangement que les tiroirs qui opèrent un simple déplacement rectiligne, par exemple transversal par rapport à la direction principale du démoulage.

L'invention se propose, par suite, d'apporter à un coffret à fermeture rapide, dont la constitution générale répond à celle qui est mentionnée ci-dessus afin de bénéficier des avantages qui lui sont attachés, des perfectionnements qui soient susceptibles de permettre tant une amélioration de la productivité qu'une grande diminution du temps nécessaire à son ouverture et à sa fermeture.

Selon l'invention, le but visé est atteint grâce au fait que le second taraudage est constitué par un nombre réduit de fractions angulaires - α - de filets fixes longitudinalement superposés et enracinés dans un trou cylindrique lisse, des surfaces hélicoïdales opposées de ces fractions étant placées en alignement avec une ouverture de paroi débouchant, transversalement, et de façon telle que ces surfaces hélicoïdales reçoivent un appui longitudinal des filets correspondants du prolongement, tandis que le bord externe de ces filets s'appuie transversalement sur la surface cylindrique du trou dans une région opposée auxdites fractions angulaires.

On connaît déjà, notamment dans les douilles en matière plastique servant à la réception des culots de lampe d'éclairage, des dispositions qui s'apparentent aux mesures mentionnées ci-dessus si l'on assimile la fonction des ergots transversaux des culots à celle d'un filet. Une telle assimilation ne peut toutefois pas être fondamentalement établie si l'on tient compte du fait que les systèmes d'accrochage du type baïonnette ne peuvent être démoulés à l'aide d'une broche rotative, et de la nature des fonctions dévolues à ces moyens de fixation qui, d'une part, mettent en oeuvre une paire d'ergots symétriques afin de conférer au culot une position d'équilibre, et où, d'autre part, l'intensité des forces mises en jeu est hors de proportion avec celle dont l'exercice est nécessaire lorsque l'on veut assurer la fixation étanche d'un couvercle de coffret sur son embase.

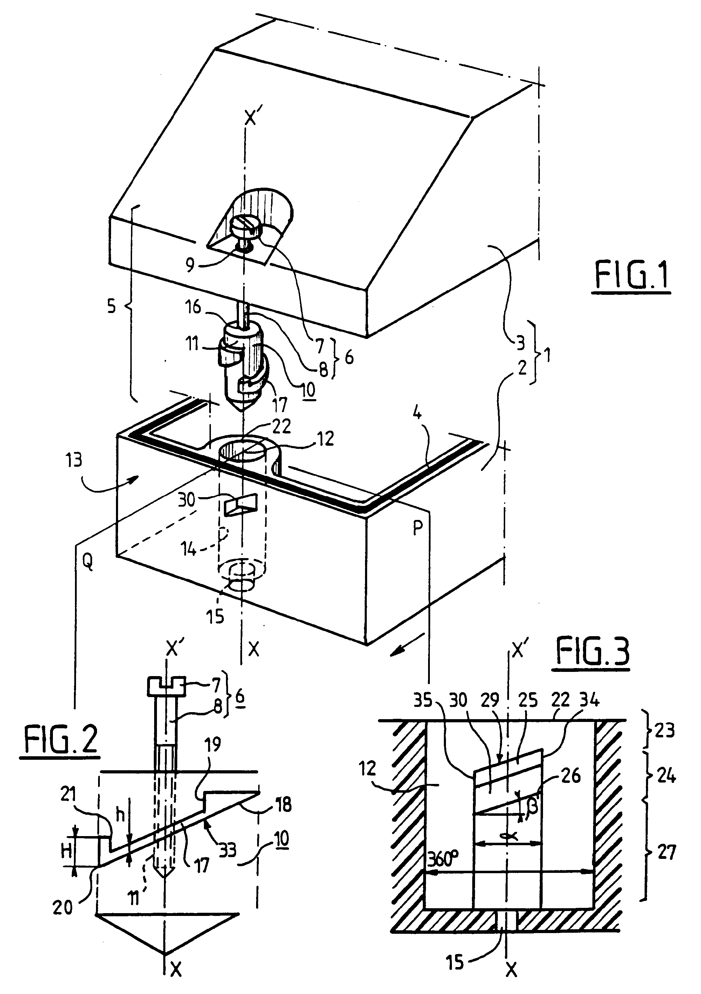

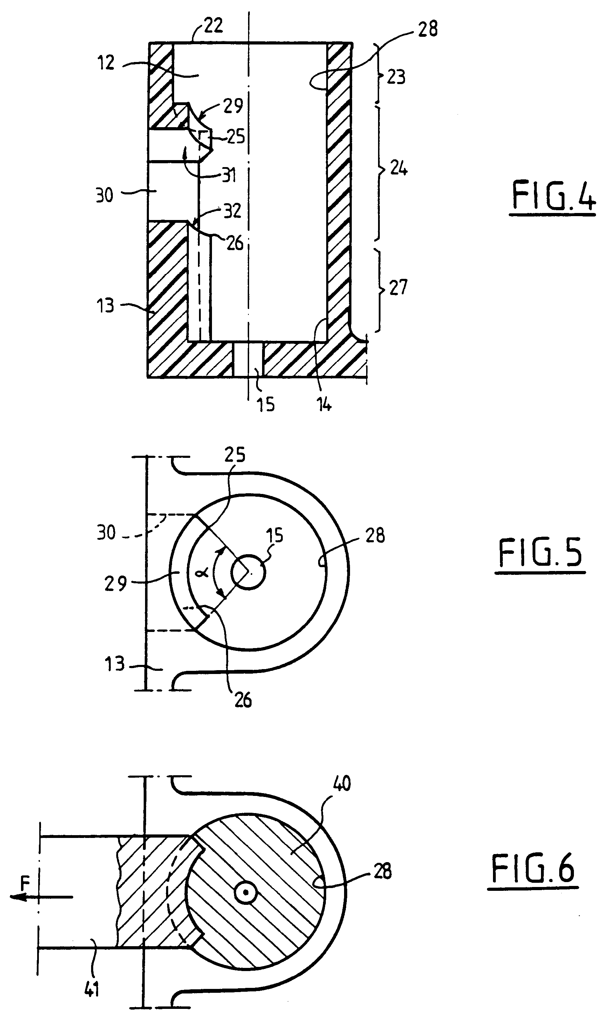

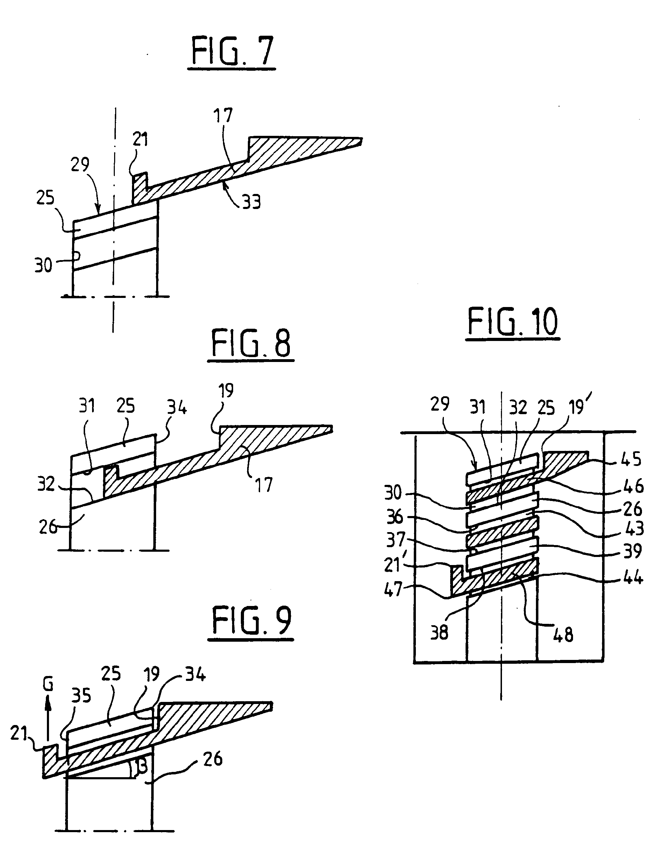

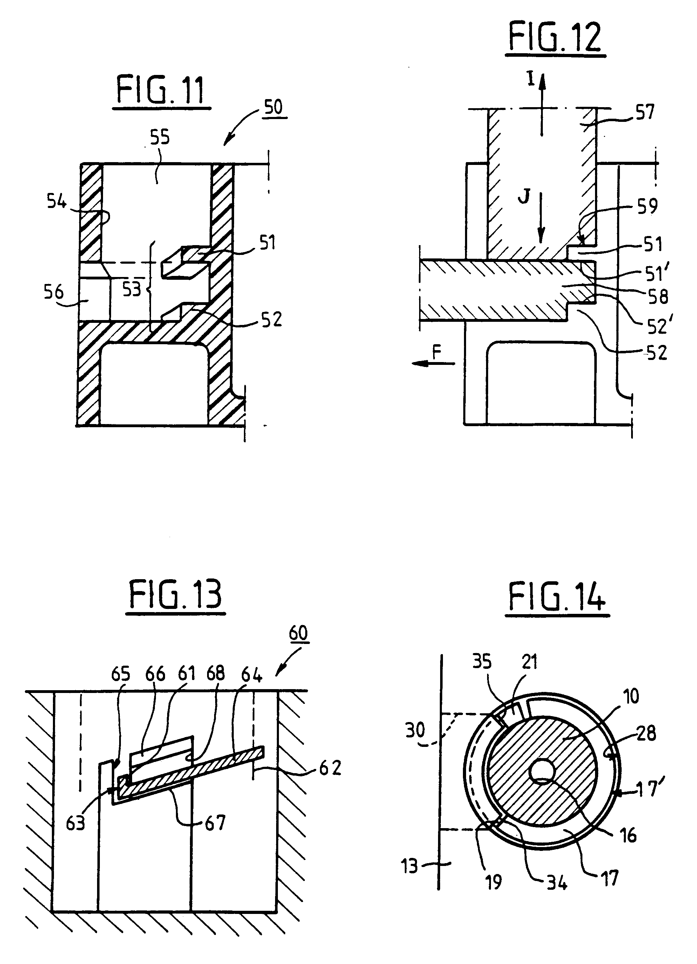

L'invention elle-même, ainsi que des variantes de réalisation susceptibles de se révéler nécessaires lorsque les forces exercées sur le filetage de l'embase dépassent une certaine limite, ou que des aménagements de disposition sont justifiés par la structure de l'embase, seront mieux compris à la lecture de la description ci-dessous et à l'examen des figures annexées qui l'accompagnent en illustrant :
A la figure 1, une vue en perspective locale de moyens de fixation rapide d'un couvercle sur une embase ;
Aux figures 2 et 3, deux vues développées d'un filetage mobile et respectivement de filets fixes appartenant aux fixations rapides ;
A la figure 4, une vue en coupe partielle par le plan Q de la figure 1 des ensembles de moyens de serrage placés dans l'embase ;
A la figure 5, une vue de dessus des éléments de la figure 4 ;
A la figure 6, une vue simplifiée d'organes disposés dans un moule pour opérer la formation des filets fixes ;
Aux figures 7, 8 et 9, des étapes successives d'engagement des filets fixes et du filet mobile des moyens de fixation ;
A la figure 10, un deuxième mode de réalisation des moyens de fixation de l'invention ;
Aux figures 11 et 12, deux vues en coupe locale par un plan analogue au plan Q de la figure 1 d'un troisième mode de réalisation de l'invention et respectivement des organes d'un moule utilisé pour sa réalisation ;
A la figure 13, une vue développée d'un aménagement que l'on peut donner au filet mobile des moyens de fixation ; et
A la figure 14, une vue axiale partiellement coupée des éléments fixes et mobiles des moyens de fixation lorsqu'ils se trouvent complètement en prise.

Un coffret à fermeture et ouverture rapides 1, qui est représenté à la figure 1, comprend une embase moulée 2 et un couvercle 3 qui sont associés de façon étanche le long d'un plan grâce à la présence d'un joint tel que 4, et de moyens de serrage à vis d'axe XX' tels que celui représenté en 5.

Ces moyens comprennent une vis métallique 6 ayant une tête 7, une tige 8 traversant une ouverture 9 du couvercle, un prolongement plastique 10 qui est concentriquement vissé sur une extrémité filetée 11 de la tige, et se trouve alignée avec un trou cylindrique coaxial 12 porté par l'embase au voisinage d'une paroi 13. Avantageusement, ce même trou peut être prolongé par un puits 14 dont le fond est pourvu d'une ouverture 15 destinée au passage d'une vis de fixation de l'embase sur un support ou tableau approprié et non représentée.

Le prolongement rotatif mobile 10 comporte, à la partie supérieure, un trou fileté à pas fin 16 pour recevoir l'extrémité 11 et, sur sa périphérie, un filet 17, à grand pas, ayant une configuration particulière. Celle-ci, qui est mieux visible à la figure 2 représentant son développement sur un plan, permet de constater qu'une extrémité 18 de ce filet, orientée du côté de la tête 7, porte un talon 19 longitudinal tandis qu'une extrémité opposée 20 de ce filet porte un crochet 21 longitudinal. La hauteur - H - de ce crochet est, par suite, plus élevée que la hauteur - h - du filet, celles-ci étant mésurées dans le sens longitudinal parallèle à l'axe XX'.

Le trou cylindrique 12, qui est représenté de façon développée à la figure 3, et en coupe à la figure 4, comprend, à partir de l'ouverture 22, une première région 23 totalement cylindrique, une deuxième région 24 équipée de fractions angulaires - α - de filets fixes superposés 25, 26 et, une troisième région 27 constituant un puits 14 déjà mentionné de section non nécessairement circulaire.

Ainsi qu'on le voit à la figure 5, l'étendue angulaire - α - des portions de filets 25, 26 reste inférieure à 180°. La figure 4 met, par ailleurs, en évidence l'existence d'une ouverture 30 qui circule entre le trou 12 et l'extérieur en passant entre les deux portions 25, 26.

Les surfaces opposées 31, 32 de ces dernières, qui pourraient être régies par des hélicoïdes mais qui peuvent également être remplacées par des surfaces planes, sont placées en alignement avec l'ouverture 30 dont elles peuvent constituer des prolongements. Cette disposition rend possible, lors de l'opération de moulage, la mise en place d'une broche 40 destinée à former les régions 29, 23, 27, le dessus du filet 25, l'ouverture 15, la surface cylindrique 28 opposée à celle où sont enracinés les filets, et pouvant être démoulée sans tourner, perpendiculairement au plan de la figure 6, tandis que la formation des surfaces 31, 32 est dévolue à un tiroir 41 qui peut être transversalement dégagé au démoulage dans le sens de la flèche F.

Lors de l'association du couvercle avec l'embase, le prolongement 10 pénètre dans le trou 12 et, en raison de l'inclinaison importante des filets 17 et 25 qui viennent en contact, leur tendance naturelle à s'engager est développée par le mouvement relatif.

Lorsque les deux parties du coffret sont appliquées l'une contre l'autre, on doit ensuite communiquer aux moyens 5 une rotation de sens approprié à l'aide d'un tournevis engagé dans la tête 7.

Ce mouvement provoque le glissement de la surface 33 du filet 17 (voir figure 7) contre la surface 29 du premier filet fixe 25 ; le mouvement hélicoïdal ainsi créé amène alors progressivement le filet 17 entre les filets 25 et 26 jusqu'au moment où le talon 19 rencontre le début 34 du filet 25 placé près de l'entrée 22 ; dans cette position, pour laquelle aucune rotation supplémentaire du prolongement 10 n'est possible, la poursuite du vissage de la tête 7 amène la pénétration de l'extrémité filetée 11 dans le trou fileté 16 et donc un déplacement en sens G du prolongement. Ce déplacement - G - amène le crochet 21, qui se trouvait alors angulairement au-delà de l'extrémité terminale 35 du filet 25, derrière cette extrémité de sorte que la tendance au dévissage naturel, que présente le dispositif en raison des angles d'hélice - ß - importants, est totalement éliminée (voir figures 7, 8, 9 et 13).

Enfin, dans cette position de serrage complet, le bord 17' du filet mobile 17 s'appuie contre la surface cylindrique 28 qui est opposée à celle recevant les portions de filets 25, 26.

L'opération de dévissage débute par un dévissage préalable de l'extrémité 11 hors du trou fileté 16, ce qui opère un déplacement du crochet 21 en sens inverse de G jusqu'au moment où celui-ci échappe à la fin 35 du filet ; le prolongement se trouve alors en état de pouvoir glisser en tournant et de remonter en sens G grâce à la présence de la partie lisse de la tige de vis 8 qui traverse elle-même librement le trou 9 du capot 3.

Le mode de réalisation de l'invention qui vient d'être décrit peut faire l'objet de variantes telles que 49 (voir figure 10).

C'est ainsi que, si l'intensité des forces de serrage du couvercle le rendait nécessaire, on pourrait disposer, dans un trou cylindrique 12', plusieurs portions de filets superposés supplémentaires 25, 26, 39. Dans ce cas, la formation des surfaces actives de filets fixes, telles que 31, 32, 36, 37, 38 nécessiterait la présence d'ouvertures latérales telles que 30, 43, 44 ; il est clair que dans ce cas un prolongement 10' en matière moulée plus long que le précédent comporterait un nombre de filets mobiles plus important pour venir en prise avec les filets fixes. Comme dans le premier mode de réalisation, un talon 19' et un crochet 21' seraient disposés sur le début 45 du premier filet 46 et respectivement à la fin 47 du dernier filet 48.

On doit enfin apprécier que, si, dans les deux exemples exposés précédemment, les filets fixes à grand pas sont enracinés sur une portion de surface cylindrique voisine de la paroi extérieure 13 de l'embase afin de permettre la pénétration de la broche 40 jusqu'au fond du puits 14, une disposition différente peut amener à déplacer les filets fixes lorsque le trou 12 ne doit pas être aussi profond.

Dans ce cas 50 (voir figure 11), des portions de filets fixes 51, 52 seraient disposées sur une portion 53 de la surface cylindrique 54 du trou 55 se trouvant opposée à l'ouverture 56 ; ainsi qu'on le voit à la figure 12, une broche 57 du moule viendrait alors s'appuyer longitudinalement en sens J sur un tiroir 58, mobile transversalement en sens F, pour ne former que la portion cylindrique supérieure du trou et la surface supérieure 59 du premier filet 51, les surfaces 51', 52' étant ici encore formées par le tiroir 58 traversant l'ouverture 56.

On peut enfin proposer une forme modifiée 60 des moyens de limitation de la rotation du prolongement 62 (voir figure 13) dans lesquels une surface longitudinale 63, placée sur le crochet d'extrémité 61 d'un filet mobile 64, viendrait s'appuyer sur une surface de butée 65 placée dans le prolongement inférieur des filets fixes 66, 67 pour jouer un rôle comparable à celui du talon utilisé dans les réalisations précédentes. La surface de butée 65 pourrait être indifféremment formée soit par une broche seule, soit en combinaison avec un tiroir nécessitant alors une ouverture 68 plus large que celle 56 illustrée sur la figure 11.

## Revendications

1. Coffret à fermeture rapide comprenant une embase (2) en matière moulée et un couvercle (3) fixé sur elle à l'aide de vis (6) traversant chacune une ouverture de ce couvercle et présentant une extrémité filetée ayant un faible diamètre et un petit pas qui se trouve engagée dans un trou taraudé appartenant à un prolongement cylindrique coaxial (10) pourvu extérieurement d'un filetage à grand pas (17) de diamètre supérieur au précédent, ce second filetage (17) étant à son tour engagé dans un second trou taraudé (12) fixe qui est disposé dans l'embase (2) au voisinage d'une paroi (13) de celle-ci,
caractérisé en ce que le second taraudage est constitué par un nombre réduit de fractions angulaires (- α -) de filets fixes (25, 26) longitudinalement superposés et enracinés dans un trou cylindrique lisse (12), des surfaces hélicoïdales (31, 32) opposées de ces fractions de filet étant placées en alignement avec une ouverture de paroi (30) débouchant, transversalement, et de façon telle que ces surfaces hélicoïdales reçoivent un appui axial des filets correspondants (17) du prolongement (10), tandis que le bord externe (17) de ces filets s'appuie transversalement sur la surface cylindrique (28) du trou dans une région (24) opposée auxdites fractions angulaires.

2. Coffret selon la revendication 1,
caractérisé en ce que la fraction angulaire (- α -) des filets fixes (25, 26) est inférieure à 180°, ces fractions étant au moins au nombre de deux.

3. Coffret selon les revendications 1 et 2,
caractérisé en ce que le prolongement (10) est équipé d'un filet mobile continu (17) dont une extrémité (18) dirigée vers la tête (7) de la vis (6) présente un talon (19), venant buter sur un début du premier filet fixe (34) dirigé vers l'entrée (22) du trou cylindrique.

4. Coffret selon les revendications 1 et 2,
caractérisé en ce que le prolongement (10) est équipé d'un filet mobile continu (17) dont une extrémité (20) opposée à la tête de la vis (6) présente un crochet (21) apte à coopérer avec la fin (35) d'un dernier filet fixe (25) par un déplacement axial (G), lors du serrage, la hauteur de ce filet mobile étant longitudinalement moindre que la hauteur de ce crochet.

5. Coffret selon l'une des revendications 1 à 4,
caractérisé en ce que l'ouverture (30) respectivement (56) extérieure traverse une cloison (13) de l'embase (2) qui est indifféremment voisine de, ou opposée à, ladite région de surface cylindrique (24) respectivement (53).

## Patentansprüche

1. Schnellverschluß-Schaltkastengehäuse mit einem Sockel (2) aus gegossenem Material und einem auf ihm mit Hilfe von Schrauben (6) befestigten Deckel (3), die je eine Öffnung dieses Deckels durchqueren und ein außen mit Gewinde versehenes Ende mit geringem Durchmesser und kleinem Gewindegang aufweisen, das in ein innengewindetes Loch eingeführt ist, welches zu einer koaxialen zylindrischen Verlängerung (10) gehört, die mit einem Gewinde mit großem Gewindegang (17) eines Durchmessers versehen ist, der größer ist als der vorhergehende, wobei dieses zweite Außengewinde (17) seinerseits in ein zweites festes innengewindetes Loch (12) eingeführt ist, das im Sockel (2) in der Nähe einer seiner Wände (13) angeordnet ist,
dadurch gekennzeichnet, daß das zweite Innengewinde aus einer reduzierten Anzahl von Winkelausschnitten (- α -) fester Gewinde (25, 26) besteht, die in Längsrichtung übereinanderliegen und in einem glatten zylindrischen Loch (12) wurzeln, wobei einander entgegengesetzte schraubenförmige Oberflächen (31, 32) dieser Gewindeausschnitte fluchtend mit einer Wandöffnung (30) angeordnet sind, die in Querrichtung und derart mündet, daß diese schraubenförmigen Oberflächen einen axialen Druck der entsprechenden Gewinde (17) der Verlängerung (10) empfangen, während der Außenrand (17) dieser Gewinde sich in Querrichtung auf der zylindrischen Oberfläche (28) des Lochs in einem Bereich (24) abstützt, der den Winkelausschnitten entgegengesetzt ist.

2. Schaltkastengehäuse nach Anspruch 1, dadurch gekennzeichnet, daß der Winkelausschnitt (- α -) der festen Gewinde (25, 26) kleiner als 180° ist, wobei es mindestens zwei Ausschnitte gibt.

3. Schaltkastengehäuse nach den Ansprüchen 1 und 2, dadurch gekennzeichnet, daß diese Verlängerung (10) mit einem beweglichen durchgehenden Gewinde (17) ausgestattet ist, von dem ein zum Kopf (7) der Schraube (6) gerichtetes Ende (18) einen Absatz (19) aufweist, der gegen einen Anfang des ersten festen Gewindes (34) anschlägt, das zum Eingang (22) des zylindrischen Lochs hin gerichtet ist.

4. Schaltkastengehäuse nach den Ansprüchen 1 und 2, dadurch gekennzeichnet, daß die Verlängerung (10) mit einem beweglichen durchgehenden Gewinde (17) ausgestattet ist, von dem ein Ende (20) entgegengesetzt dem Kopf der Schraube (6) einen Haken (21) aufweist, der mit dem Ende (35) eines letzten festen Gewindes (25) durch eine axiale Verschiebung (G) beim Aufschrauben zusammenwirken kann, wobei die Höhe dieses beweglichen Gewindes in Längsrichtung geringer ist als die Höhe dieses Hakens.

5. Schaltkastengehäuse nach einem der Ansprüche 1 bis 4, dadurch gekennzeichnet, daß die äußere Öffnung (30) bzw. (56) eine Trennwand (13) des Sockels (2) durchquert, die dem Bereich der zylindrischen Oberfläche (24) bzw. (53) benachbart und/oder entgegengesetzt ist.

## Claims

1. Quick closure box comprising a molded material base (2) and a lid (3) fixed thereon by means of screws (6) each passing through an opening in this lid and having a threaded end with a small diameter and small pitch which is engaged in a tapped hole belonging to a coaxial cylindrical extension (10) having externally a large pitch thread (17) of a diameter greater than the preceding one, this second thread (17) being in its turn engaged in a second fixed tapped hole (12) which is disposed in the base (2) in the vicinity of a wall thereof (13), characterized in that said second tapping is formed by a reduced number of angular fractions ( - α - ) of fixed longitudinally superimposed threads (25, 26) rooted in a smooth cylindrical hole (12), helical surfaces (31, 32) opposite these thread fractions being placed in alignment with a transversely opening wall opening (30) and so that these helical surfaces receive an axial support of the corresponding threads (17) of the extension (10), whereas the external edge (17) of these threads bears transversely on the cylindrical surface (28) of the hole in a region (24) opposite said angular fractions.

2. The box as claimed in claim 1,
characterized in that the angular fraction ( -α- ) of the fixed threads (25, 26) is less than 180°, these fractions being at least two in number.

3. The box as claimed in claims 1 and 2,
characterized in that the extension (10) is equipped with a continuous mobile thread (17), one end (18) of which directed towards the head (7) of the screw (6) has a heel (19), abutting on a beginning of the first fixed thread (34) directed towards the inlet (22) of the cylindrical hole.

4. the box as claimed in claims 1 and 2,
characterized in that said extension (10) is equipped with a continuous mobile thread (17, one end (20) of which opposite the head of the screw (6) has a hook (21) adapted for cooperating with the end (35) of a last fixed thread (25) by an axial movement (G), during clamping, the height of this mobile thread being longitudinally less than the height of this hook.

5. The box as claimed in one of claims 1 to 4,
characterized in that said external opening (30), respectively (56) passes through a partition (13) of the base (2) which is either close to or opposite said cylindrical surface region (24), respectively (53).
